# EUROPEAN PATENT APPLICATION

(11) **EP 4 751 909 A1**
(43) Date of publication of application: **03.06.2026**
(21) Application number: 25218945.1
(22) Date of filing: 27.11.2025
(51) Int. Cl.: B32B 27/06, B32B 5/18, B32B 7/12, B32B 27/18, B32B 27/28

(54) **COMPOSITE PAD**

(30) Priority: 29.11.2024 KR 20240175895
(71) Applicant: Innox Advanced Materials CO., Ltd., Asan-si, Chungchongnam-do 31409 (KR)
(72) Inventor: YU, Hong Jeong, 31409 Chungcheongnam-do (KR); YOO, Sung Ju, 31409 Chungcheongnam-do (KR); SONG, Duckhyun, 31409 Chungcheongnam-do (KR); KWON, Kidae, 31409 Chungcheongnam-do (KR)
(74) Representative: Zacco Sweden AB

(57) **Abstract**

Provided is a composite pad comprising: a silicone foam; an adhesive layer; and an outer layer, wherein the adhesive layer comprises a binder and a reactive filler that undergoes a dehydration reaction at a temperature equal to or higher than 100°C, wherein the binder has a hardness in a range of a penetration hardness of 90 to a Shore 00 hardness of 40, wherein the reactive filler is comprised in an amount of 50 to 300 parts by weight based on 100 parts by weight of the binder, wherein a thickness of the adhesive layer is in a range of 40 µm to 400 µm.

## Description

### CROSS-REFERENCE TO RELATED APPLICATION

This application claims priority from Korean Patent Application No. 10-2024-0175895 filed on November 29, 2024 in the Korean Intellectual Property Office, and all the benefits accruing therefrom under 35 U.S.C. 119, the contents of which in its entirety are herein incorporated by reference.

### BACKGROUND

### Field

The present disclosure relates to a composite pad comprising an adhesive layer that absorbs heat and has fire extinguishing and heat blocking performance.

### Description of Related Art

These days, a demand for an eco-friendly vehicle such as an electric vehicle and a fuel cell vehicle that does not emit exhaust gas is increasing, and the eco-friendly vehicle is equipped with a motor for traveling and a battery for operating the motor. In a battery pack applied to the eco-friendly vehicle as described above, multiple battery cells are stacked, and a surface-pressure pad capable of buffering in response to pressure is disposed between adjacent two battery cells.

The battery pack constituted as described above is likely to undergo thermal runaway, in which temperature continuously rises during use due to a manufacturing defect, erroneous handling or misuse of the battery, occurrence of short-circuit of some battery cells, or the like, and a temperature of the battery cell rapidly increases due to exposure to external heat or flame. In addition, because a plurality of battery cells are stacked by being in close contact with each other, the thermal runaway rapidly propagates to adjacent battery cells within a short time period, which may lead to a disaster such as ignition or explosion.

Accordingly, in order to prevent the thermal runaway when exposed to the above-described environment during use, more excellent fire resistance and heat dissipation characteristics are required.

Although a silicon foam is comprised in the surface-pressure pad, there is a problem that the silicon foam is decomposed without maintaining a thermal insulation performance in a high temperature environment equal to or higher than 400°C due to a limitation in heat resistance of the silicon foam itself. Thus, there is a case in which an outer layer such as a fire resistant layer or a heat dissipation layer is additionally deposited on the silicon foam to solve the above problem.

In order to deposit the outer layer such as the fire resistant layer on the silicon foam, an adhesive layer is used therebetween. Because most adhesive layers comprise an organic material, there is a limit in preventing the thermal runaway in the event of fire.

Accordingly, the present disclosure is intended to provide a composite pad comprising an adhesive layer that absorbs heat and has fire extinguishing and heat blocking performance.

### SUMMARY

A technical purpose of the present disclosure is to provide a composite pad comprising an adhesive layer that absorbs heat and has fire extinguishing and heat blocking performance.

Technical purposes of the present disclosure are not limited to the above-mentioned technical purpose, and other objects and advantages of the present disclosure that are not mentioned may be understood by the following description, and will be more clearly understood by embodiments of the present disclosure. In addition, it will be readily seen that technical purposes and advantages of the present disclosure may be realized by means indicated in the claims and combinations thereof.

The present disclosure provides a composite pad comprising: a silicone foam; an adhesive layer; and an outer layer, wherein the adhesive layer comprises a binder and a reactive filler that undergoes a dehydration reaction at a temperature equal to or higher than 100°C, wherein the binder has a hardness in a range of a penetration hardness of 90 to a Shore 00 hardness of 40, wherein the reactive filler is comprised in an amount of 50 to 300 parts by weight based on 100 parts by weight of the binder, wherein a thickness of the adhesive layer is in a range of 40 µm to 400 µm.

The binder may comprise at least one resin selected from a group consisting of a polyurethane-based resin, a silicone-based resin, and an epoxy-based resin.

A viscosity of the binder may be in a range of 100cP to 2000cP at 25°C.

The reactive filler may be metal hydroxide particles.

The metal hydroxide particles may comprise at least one selected from a group consisting of B(OH)₃, Al(OH)₃, Mg(OH)₂, and combinations thereof.

The reactive filler may comprise a mixture of first metal hydroxide particles having a D50 equal to or smaller than 2 µm and second metal hydroxide particles having a D50 equal to or greater than 5 µm*.*

The silicone foam may be a foamed cured product of a composition comprising a polyalkylsiloxane-based resin.

The outer layer may comprise at least one layer selected from a group consisting of a fire resistant layer, a flame retardant layer, an electrically insulating layer, a heat dissipation layer, and combinations thereof.

The composite pad may be positioned between battery cells.

The composite pad according to the present disclosure comprises the adhesive layer that exhibits the excellent adhesion between the silicone foam and the outer layer, absorbs heat, and has the fire extinguishing and heat blocking performance. At the same time, the adhesive layer is able to prevent the thermal runaway by delaying the heat transfer when exposed to the high temperature.

In addition to the above-described effect, specific effects of the present disclosure will be described together while describing specific matters for implementing the present disclosure.

### BRIEF DESCRIPTION OF DRAWINGS

FIG. 1 schematically illustrates a structure of a composite pad according to an embodiment of the present disclosure.
FIG. 2 schematically illustrates a structure of a composite pad according to another embodiment of the present disclosure.
FIG. 3 is a schematic diagram of a heat transfer delay test of Experimental Example 4.
FIG. 4 is a schematic diagram illustrating a composite pad disposed between battery cells.

### DETAILED DESCRIPTIONS

The above-described technical purposes, features, and advantages will be described in detail hereinafter, and accordingly, a person having ordinary skill in the art to which the present disclosure pertains will be able to easily implement the technical idea of the present disclosure. In describing the present disclosure, when it is determined that a detailed description of a known technology related to the present disclosure may unnecessarily obscure the gist of the present disclosure, the detailed description will be omitted. Hereinafter, preferred embodiments according to the present disclosure will be described in detail.

Hereinafter, it may mean that when a first component is described to be disposed "on (or under)" a second component, the first component may not only be disposed in contact with a top surface (or a bottom surface) of the second component, but also be disposed on the second component with a third component interposed therebetween.

Additionally, it should be understood that when a component is described as being "connected to", "combined to", or "coupled to" another component, the components may be directly connected or coupled to each other, but other components may be "interposed" therebetween and the components may be "connected to", "combined to", or "connected to" each other via said other components.

Hereinafter, a composite pad according to some embodiments of the present disclosure will be described.

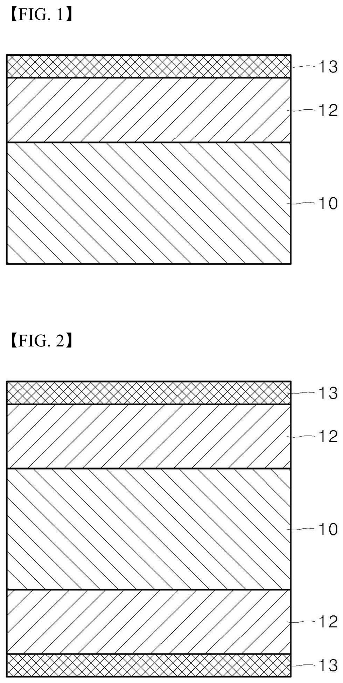

As illustrated in FIG. 1, a composite pad according to an embodiment of the present disclosure comprises a silicone foam, an adhesive layer, and an outer layer. The adhesive layer may exhibit excellent adhesion between the silicone foam and the outer layer, absorb heat, and exhibit fire extinguishing and heat blocking performance. At the same time, the adhesive layer may prevent thermal runaway by delaying heat transfer when exposed to high temperature. Hereinafter, it will be described in detail.

### Adhesive layer

The composite pad according to the present disclosure comprises the adhesive layer between the silicone foam and the outer layer, thereby exhibiting the excellent adhesion.

In general, because most adhesive layers comprise an organic material, there is a problem that the organic material acts as a hindrance factor in preventing the thermal runaway in the event of fire. On the other hand, the adhesive layer may exhibit excellent heat resistance and thus exhibit the excellent adhesion even at the high temperature. Accordingly, a phenomenon in which a portion of the composite pad is detached and spreads the fire when the composite pad is exposed to the high temperature may be prevented. In addition, the thermal runaway may be prevented by delaying heat diffusion.

The adhesive layer is a cured product of an adhesive composition comprising a binder and a reactive filler that undergoes a dehydration reaction at 100°C or higher, and thus the adhesive layer comprises the binder and the reactive filler that undergoes the dehydration reaction at 100°C. Here, the term "reactive" includes both chemical reactivity, which involves breaking an existing chemical bond or forming a new chemical bond, and physical reactivity.

Specifically, the reactive filler undergoes the dehydration reaction at 100°C or higher, and does not react during normal operation of a battery, but generates water (H2O) when exposed to an abnormally high temperature environment to perform the fire extinguishing or the heat blocking. Here, "water (H2O)" includes liquid water, water vapor, or a combination thereof. Further, the generated water may additionally absorb heat while evaporating. Accordingly, spread of heat to the silicone foam or an adjacent battery cell may be prevented, thereby preventing the thermal runaway from occurring in the battery.

For example, when a reactive filler that undergoes the dehydration reaction at a temperature lower than 100°C is comprised, moisture in the liquid form is easily generated from the adhesive layer, which may result in deterioration of the adhesion. In addition, components such as an electrode or the like included in the battery may be oxidized or discolored. Further, when the moisture is subsequently exposed to the high temperature, the moisture is vaporized into water vapor and is expanded in volume, thereby increasing a possibility of breakage of an adhesive layer surface. Furthermore, fire resistance may be deteriorated, and thus the heat transfer delay effect may be deteriorated.

The reactive filler may be metal hydroxide particles. For example, the metal hydroxide particles may comprise at least one selected from a group consisting of B(OH)₃, Al(OH)₃, Mg(OH)₂, and combinations thereof.

The adhesive layer may comprise two or more metal hydroxides. In this case, a difference in thermal decomposition temperature between a first metal hydroxide and a second metal hydroxide may be in a range of 50°C to 150°C. Accordingly, in a situation in which the temperature of the battery increases, the metal hydroxides may sequentially exhibit reactivity to more efficiently prevent the heat diffusion phenomenon, but the present disclosure may not be limited thereto.

The adhesive layer may comprise the two or more metal hydroxides. For example, the adhesive layer may comprise, as the reactive filler, a mixture of first metal hydroxide particles having a D50 equal to or smaller than 2 µm and second metal hydroxide particles having a D50 equal to or greater than 5 µm, but the present disclosure may not be limited thereto. For example, the D50 of the first metal hydroxide particles may be in a range of 0.3 µm to 2 µm, and the D50 of the second metal hydroxide particles may be in a range of 5 µm to 40 µm, but the present disclosure may not be limited thereto.

The reactive filler is comprised in an amount of 50 to 300 parts by weight based on 100 parts by weight of a binder. Accordingly, while sufficiently absorbing heat well and preventing the thermal runaway from occurring, the excellent adhesion may be maintained. For example, when the content of the reactive filler is less than 50 parts by weight, the adhesive layer is substantially affected by characteristics of the binder, so that the characteristics of the adhesive layer may be weakened, the heat resistance may be lowered and thus the adhesion may be deteriorated when exposed to the high temperature for a long time, and the heat transfer delay effect may be low and thus sufficient fire resistance may not be exhibited. In addition, when the content of the reactive filler exceeds 300 parts by weight, the adhesion may be deteriorated due to lack of compatibility with an organic binder and an insufficient contact surface area.

The adhesive layer comprises the binder. The reactive filler may be dispersed in the binder. The binder has a hardness in a range of a penetration hardness of 90 to a Shore 00 hardness of 40. Accordingly, the excellent heat resistance and the excellent heat diffusion prevention effect may be exhibited, and simultaneously, the excellent adhesion may be exhibited by physical and chemical reaction with the reactive filler.

Specifically, as described above, the reactive filler dispersed in the binder may generate water by the dehydration reaction, and simultaneously absorb heat along with the fire distinguishing while vaporizing the water, thereby delaying the heat transfer. In this regard, the vaporized water vapor may lower the temperature while permeating through the adhesive layer, and it was found that this phenomenon varies depending on the hardness of the binder.

In general, a hardness measurement method varies depending on an object whose hardness to be measured. Specifically, a hardness of a soft material may be determined using the penetration hardness, and the penetration hardness may be measured according to ASTM D217. In addition, Shore 00 hardness is used to measure a hardness of a somewhat harder material than the material whose hardness is determined using the penetration hardness, and the Shore 00 hardness may be measured according to ASTM D 2240.

The binder has the hardness in the range of the penetration hardness of 90 to the Shore 00 hardness of 40, and may allow water generated from the reactive filler to be vaporized into water vapor and to permeate through the adhesive layer well. Accordingly, heat may be reduced and the heat diffusion may be well delayed. At the same time, the excellent adhesion may be exhibited. For example, when the hardness of the binder is lower than the penetration of 90, a curing density of the binder itself may be low, and the reactive filler may be easily separated due to an insufficient force of bonding with the reactive filler. On the other hand, when the hardness of the binder is higher than the Shore 00 hardness of 40, the heat diffusion may not be delayed, and when the binder is bonded with the reactive filler, the bonding force therebetween may be significantly low and thus the adhesive layer may fail and be delaminated.

The binder may comprise at least one resin selected from a group consisting of a polyurethane-based resin, a silicone-based resin, and an epoxy-based resin. For example, the binder may be the silicone-based resin.

The binder may have a viscosity in a range of 100cP to 2000cP at 25°C. Accordingly, excellent coatability and excellent adhesion and durability may be exhibited while the reactive filler is comprised in the adhesive layer, but the present disclosure may not be limited thereto.

The adhesive composition may further comprise an additive such as a silane coupling agent. The adhesive composition may exhibit a viscosity equal to or lower than 50,000cP at 25°C. Preferably, it may exhibit a viscosity of 48,000cP, but the present disclosure may not be limited thereto.

A thickness of the adhesive layer is in a range of 40 µm to 400 µm. The adhesive layer has the thickness within the above range, thereby well delaying the heat transfer and preventing the thermal runaway.

The adhesive layer may exhibit an adhesion equal to or greater than 90gf/cm. In addition, because of the excellent heat resistance thereof, the adhesion equal to or greater than 90gf/cm may be exhibited even when the adhesive layer is exposed at a high temperature of 200°C for 12 hours. For example, the adhesive layer may exhibit an adhesion equal to or greater than 100 gf/cm or equal to or greater than 110 gf/cm, but the present disclosure may not be limited thereto.

### Silicone foam

The composite pad comprises the silicone foam to which the adhesive layer is attached. The silicone foam may be used without limitation as long as it is used as a surface-pressure pad in the battery.

For example, the silicone foam may be a foam formed by hydrogen gas generated by a dehydrosilylation reaction. The silicone foam may be a foamed cured product of a composition comprising a polyalkylsiloxane-based resin. The polyalkylsiloxane-based resin may be formed from a silicone resin composition forming a matrix of the foam. The silicone resin composition is not particularly limited as long as it is a composition that satisfies thermal conductivity, tensile strength, elongation, and/or glass transition temperature (Tg) of the silicone foam.

For example, the silicone resin composition may comprise a polydialkylsiloxane (A), a vinyl alkyl MQ siloxane resin (B), and a poly(alkylhydrogen)siloxane (C), each having a vinyl group at an end thereof, and a polydialkylsiloxane (D) and an alcohol (E), each having a hydroxyl group at an end thereof.

More specifically, the polydialkylsiloxane (A) having the vinyl group at the end thereof may be a main silicon resin comprised in the resin composition, and may be an MDM-structured compound, in which a main chain comprises repeating units of the dialkylsiloxane (D) and both ends thereof are capped with a monomer (M) having the vinyl group. The polydialkylsiloxane (A) having the vinyl group at the end thereof may impart softness to the silicone foam. The polydialkylsiloxane (A) having the vinyl group at the end thereof may be a mixture of two types of materials having different viscosities. For example, the polydialkylsiloxane (A) having the vinyl group at the end thereof may be a mixture of a polydialkylsiloxane (A-1) having the vinyl group at a first end and having a viscosity in a range of 100cP to 1,000cP at 25°C and a polydialkylsiloxane (A-2) having the vinyl group at a second end and having a viscosity equal to or greater than 5,000cP and smaller than 100,000cP. It may be preferable that the polydialkylsiloxane (A) having the vinyl group at the end thereof does not comprise a material having a viscosity equal to or greater than 100,000cP. The polydialkylsiloxane (A) having the vinyl group at the end thereof may be comprised in an amount of 10 to 80 parts by weight based on 100 parts by weight of the silicone resin composition. Further, the polydialkyl siloxane (A) having the vinyl group at the end thereof may not be particularly limited as long as it is generally used in the art, but may comprise, for example, a polydialkyl siloxane having an alkyl group with 1 to 6 carbon atoms. For example, it may be a polydimethylsiloxane end-treated with the vinyl group.

In addition, the vinyl alkyl MQ siloxane resin (B) is a polymer of a silicon resin having a three-dimensional structure composed of M units [(CH2CH)(CH3)2SiO1/2] and Q units [SiO4/2], and may impart hardness and toughness to the silicon foam. The vinyl alkyl MQ siloxane resin (B) may have a weight-average molecular weight in a range of 1,000g/mol to 8,000g/mol. The vinyl alkyl MQ siloxane resin (B) may be comprised in an amount of 0.5 to 15 parts by weight based on 100 parts by weight of the silicone resin composition. For example, the vinyl alkyl MQ siloxane resin (B) may be a vinyl methyl MQ silicone resin.

The poly(alkylhydrogen)siloxane (C), as a curing agent that reacts with the vinyl group of the (A) or the vinyl group of the (B), may be comprised in an amount of 0.1 to 10 parts by weight based on 100 parts by weight of the silicone resin composition. The poly(alkylhydrogen)siloxane (C) may be a material having a viscosity in a range of 60cP to 1,000cP at 25°C. For example, the (C) may be a poly(methylhydrogen)siloxane.

The polydialkylsiloxane (D) having the hydroxyl group at the end thereof may react with hydrogen of the (C), which is the curing agent, to generate hydrogen gas (H2) and form a foam, and may be comprised in an amount of 5 to 20 parts by weight based on 100 parts by weight of the silicone resin composition. The polydialkylsiloxane (D) having the hydroxyl group at the end thereof may be comprised in the amount within the above range, thereby affecting a tensile strength and an elongation of the silicone foam. The polydialkylsiloxane (D) having the hydroxyl group at the end thereof may be a material having a viscosity in a range of 10cP to 100cP at 25°C. For example, the (D) may be a polydimethylsiloxane end-treated with the hydroxyl group.

The alcohol (E) may react with the hydrogen of the (C), which is the curing agent, together with the (D) to generate hydrogen gas (H2) and form the foam. A monomolecular material may be used as the alcohol, so that the reaction may proceed faster than with the (D), thereby affecting a foaming rate. For example, the alcohol may be methanol or ethanol having a small molecular weight. Preferably, it may be ethanol. Because the (E) has poor compatibility with silicon, it may be preferable to use the (E) in a small amount. For example, the alcohol (E) may be comprised in an amount of smaller than 1 part by weight, for example, greater than 0 part by weight and smaller than 1 part by weight, based on 100 parts by weight of the silicone resin composition.

### Outer layer

The composite pad comprises the outer layer on an opposite surface of the adhesive layer. Thus, the excellent fire resistance and heat dissipation characteristics are exhibited in an environment with a temperature significantly exceeding the heat resistance of the silicone foam, thereby preventing the occurrence of the thermal runaway.

The outer layer, as a layer positioned outwardly of the silicon foam, may comprise at least one layer selected from a group consisting of a fire resistant layer, a flame retardant layer, an electrically insulating layer, a heat dissipation layer, and combinations thereof.

Specifically, the fire resistant layer or the flame retardant layer, as a layer that directly blocks the flame, may comprise a heat-resistant polymer containing mica, silica, carbon fiber, and glass fiber.

The electrically insulating layer, as a layer that secures electrical insulation between the battery cells and between positive and negative electrodes during the battery operation, may comprise polyimide (PI), polyethylene terephthalate (PET), silicone, an acryl-based polymer, a urethane-based polymer, or the like.

The heat dissipation layer, as a layer that anisotropically dissipates heat through heat diffusion, may comprise graphite, graphene, a composite of thermally conductive inorganic particles and polymers, and the like.

As illustrated in FIG. 2, the composite pad may have a sandwich structure in which the adhesive layers are respectively attached to both surfaces of the silicone foam and each outer layer is deposited on each adhesive layer.

The composite pad may exhibit a thermal delay duration equal to or longer than 60 seconds in a thermal transfer delay test to be described later. For example, the thermal delay duration may be equal to or longer than 80 seconds or equal to or longer than 100 seconds, but the present disclosure may not be limited thereto.

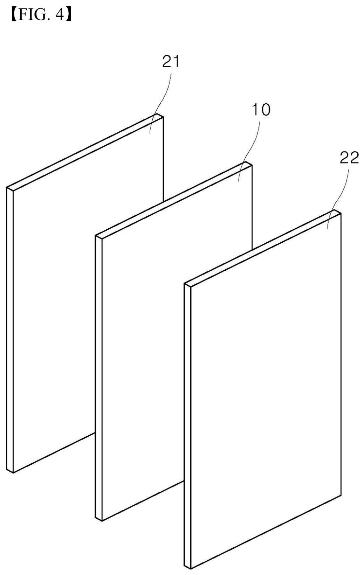

As illustrated in FIG. 4, the composite pad may be positioned between the battery cells. Specifically, the composite pad 10 may be disposed between battery cells 21 and 22. Accordingly, the composite pad 10 may exhibit a buffering function and the thermal runaway prevention function with the excellent adhesion.

### (Present Examples)

### Present Example 1

An adhesive composition comprising 60 parts by weight of a binder A-1, 40 parts by weight of a reactive filler B-1, and 0.9 parts by weight of a silane coupling agent((3-glycidoxypropyl)trimethoxysilane, CAS 2530-83-8) was prepared.

Then, the adhesive composition was applied to each of both surfaces of a silicone foam having a thickness of 2,000 µm, and a fire resistant layer comprising mica having a thickness of 100 µm was deposited thereon. Thereafter, the adhesive composition was cured to prepare a composite pad comprising an adhesive layer having a thickness of 300 µm.

### Present Examples 2 to 9 and Comparative Examples 1 to 5

By changing the binder and the reactive filler in Present Example 1 as illustrated in Table 1 to 3, adhesive compositions of Present Examples 2 to 9 and Comparative Examples 1 to 5 were prepared.

In addition, by changing the thicknesses of the silicon foam, the adhesive layer, and the outer layer (the fire resistant layer) as illustrated in Table 7 to 9, composite pads of Present Examples 2 to 9 and Comparative Examples 1 to 5 were prepared.

**[Table 1]**

| Adhesive layer | | Present Example 1 | Present Example 2 | Present Example 3 | Present Example 4 | Present Example 5 |
|---|---|---|---|---|---|---|
| Binder (A) | A-1 (penetration: 50) | 60 | 25 | 25 | | 30 |
| | A-2 (Shore 00: 40) | | | | 25 | |
| | A-3(Shore 00: 65) | | | | | |
| Reactive filler (B) | B-1 (D50:8µm) | 40 | 75 | 75 | 75 | 60 |
| | B-2 (D50: 1µm) | | | | | 15 |
| | B-3(D50:1*µ*m) | | | | | |
| | B-4(D50:30µm) | | | | | |

**[Table 2]**

| Adhesive layer | | Present Example 6 | Present Example 7 | Present Example 8 | Present Example 9 |
|---|---|---|---|---|---|
| Binder (A) | A-1 (penetration: 50) | 50 | 30 | 30 | 25 |
| | A-2 (Shore 00: 40) | | | | |
| | A-3(Shore 00: 65) | | | | |
| Reactive filler (B) | B-1 (D50:8µm) | | | | 60 |
| | B-2 (D50: 1µm) | | | | |
| | B-3(D50:1*µ*m) | 50 | 70 | 70 | 15 |
| | B-4(D50:30µm) | | | | |

**[Table 3]**

| Adhesive layer | | | Comparative Example 1 | Comparative Example 2 | Comparative Example 3 | Comparative Example 4 | Comparative Exampl e 5 |
|---|---|---|---|---|---|---|---|
| Binder (A) | A-1 (penetration: 50) | | 25 | 70 | | 100 | 50 |
| | A-2 (Shore 00: 40) | | - | - | - | - | - |
| | A-3(Shore 00: 65) | | - | - | 50 | - | - |
| Reacti ve filler (B) | B-1 (D50:8µm) | | 75 | 30 | 50 | - | - |
| | B-2 (D50:1*µ*m) | | - | - | - | - | - |
| | B-3(D50:1*µ*m) | | - | - | - | - | - |
| | B-4(D50:30*µ*m) | | | | | | 50 |

The materials in Table 1 are as follows.
A-1: Silicone-based resin of penetration 50 (Wacker Silgel 612)
A-2: Silicone-based resin of Shore 00 40 (Wacker Elastosil RT 745 T)
A-3: Silicone-based resin of Shore 00 65 (Elkem EA 8990 SC)
B-1: Aluminum hydroxide (D50=8 µm) (dehydration reaction starting temperature: 200°C)
B-2: Aluminum hydroxide (D50=1 µm) (dehydration reaction starting temperature: 200°C)
B-3: Magnesium hydroxide (D50=1 µm) (dehydration reaction starting temperature: 340°C)
B-4: Zirconium hydroxide (Zirconium(IV) hydroxide) (D50=30 µm) (dehydration reaction starting temperature: 60°C)

### Evaluation

### Experimental Example 1: Viscosity (cP) of adhesive layer composition

For each of the adhesive compositions of Present Examples and Comparative Examples, viscosity of each adhesive composition was measured using a rheometer (AntonPaar MCR 302e, measuring plate: PP25, and measurement at 25°C) according to the measurement standard ISO 3219-2 at 25°C, with a shearing speed of 10/sec. Results are listed in Table 4 to Table 6.

### Experimental Example 2: Adhesion (gf/cm)

Samples of the adhesive layers prepared in Present Examples and Comparative Examples were prepared according to the JIS C 6741 standard, and adhesion of the samples was measured while peeling each adhesive layer at a rate of 5mm per second in an 180° opposite direction. Results are listed in Table 4 to Table 6.

### Experimental Example 3: Heat resistance of adhesive layer

The adhesive layers prepared in Present Examples and Comparative Examples were exposed to 200°C for 12hrs, and then the adhesion thereof was measured in the same manner as in Experimental Example 2. Results are listed in Table 4 to Table 6.

### Experimental Example 4: Heat transfer delay test

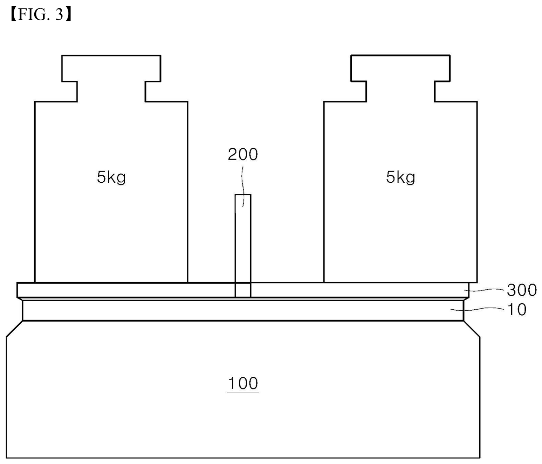

The composite pads 10 of Present Examples and Comparative Examples were cut into a size of 50mm X and 50mm to prepare samples. As illustrated in FIG. 3, the sample 10 was attached to one surface of a hot plate 100 of 650°C. Then, a thermocouple sensor 200 was attached to an opposite surface of the sample opposite to which the hot plate was not attached, and a SUS plate 300 and a 10kg weight were placed thereon to apply a constant pressure. Using a thermocouple sensor, a duration from a time point of the attachment to the hot plate 100 to a time point at which a central portion of the opposite surface of the composite pad to which the hot plate was not attached reaches 200°C was measured as a thermal delay duration (sec).

**[Table 4]**

| Adhesive layer | Present Example 1 | Present Example 2 | Present Example 3 | Present Example 4 | Present Example 5 |
|---|---|---|---|---|---|
| Viscosity (cP) | 19,500 | 37,600 | 37,600 | 42,800 | 31,200 |
| Adhesion (gf/cm) | 105.6 | 111.9 | 111.9 | 270.8 | 123.1 |
| Adhesion (gf/cm) after heat resistance evaluation | 122.8 | 194.9 | 194.9 | 221.7 | 191.6 |

**[Table 5]**

| Adhesive layer | Present Example 6 | Present Example 7 | Present Example 8 | Present Example 9 |
|---|---|---|---|---|
| Viscosity (cP) | 21,900 | 47,500 | 47,500 | 34,200 |
| Adhesion (gf/cm) | 117.1 | 90.9 | 90.9 | 109.3 |
| Adhesion (gf/cm) after heat resistance evaluation | 153.3 | 116.2 | 116.2 | 142.1 |

**[Table 6]**

| Adhesive layer | Comparative Example 1 | Comparative Example 2 | Comparative Example 3 | Comparative Example 4 | Comparati ve Example 5 |
|---|---|---|---|---|---|
| Viscosity (cP) | 37,600 | 11,900 | 21,980 | 1,980 | 13,200 |
| Adhesion (gf/cm) | 87.6 | 109.6 | 160.5 | 40.5 | 96.2 |
| Adhesion (gf/cm) after heat resistance evaluation | 84.4 | 81.23 | 27.3 (adhesive surface failure) | 33.5 | 16.8 (adhesive surface failure) |

**[Table 7]**

| Thickness (µm) | Present Example 1 | Present Example 2 | Present Example 3 | Present Example 4 | Present Example 5 |
|---|---|---|---|---|---|
| Silicone foam | 2,000 | 2,000 | 2,000 | 2,000 | 2,000 |
| Adhesive layer | 300 | 50 | 300 | 300 | 300 |
| Outer layer (fire resistant layer) | 100 | 100 | 100 | 100 | 100 |

**[Table 8]**

| Thickness (µm) | Present Example | Present Example | Present Example | Present Example |
|---|---|---|---|---|
| | 6 | 7 | 8 | 9 |
| Silicone foam | 2,000 | 2,000 | 2,000 | 2,000 |
| Adhesive layer | 300 | 50 | 300 | 300 |
| Outer layer (fire resistant layer) | 100 | 100 | 100 | 100 |

**[Table 9]**

| Thickness (µm) | Comparative Example 1 | Comparative Example 2 | Comparative Example 3 | Comparative Example 4 | Comparativ e Example 5 |
|---|---|---|---|---|---|
| Silicone foam | 2000 | 2000 | 2000 | 2000 | 2000 |
| Adhesive layer | 25 | 300 | 300 | 300 | 300 |
| Outer layer (fire resistant layer) | 100 | 100 | 100 | 100 | 100 |

**[Table 10]**

| | Present Example 1 | Present Example 2 | Present Example 3 | Present Example 4 | Present Example 5 |
|---|---|---|---|---|---|
| Heat transfer delay time (sec) | 133 | 116 | 198 | 218 | 225 |

**[Table 11]**

| | Present Example 6 | Present Example 7 | Present Example 8 | Present Example 9 |
|---|---|---|---|---|
| Heat transfer delay time (sec) | 141 | 107 | 184 | 209 |

**[Table 12]**

| | Comparative Example 1 | Comparative Example 2 | Comparative Example 3 | Comparative Example 4 | Comparati ve Example 5 |
|---|---|---|---|---|---|
| Heat transfer delay time (sec) | 40 | 53 | 32 | 16 | 42 |

As illustrated in the above tables, the adhesive layers of Present Examples may exhibit the excellent adhesion even when exposed to 200°C for 12 hours because of the excellent heat resistance thereof. In addition, it was confirmed that the composite pads of Present Examples comprising the adhesive layer delayed the heat transfer with the excellent fire resistance thereof. On the other hand, it was confirmed that Comparative Examples 2 to 5 exhibited reduced adhesion and poor heat transfer delay performance when exposed to 200°C for 12 hours. In addition, it was confirmed that Comparative Example 1 had poor heat transfer delay performance because of a small thickness of the adhesive layer thereof. In particular, it was confirmed that when exposed to the high temperature for a long time, Comparative Examples 3 and 5 showed the failure and delamination of the adhesive surface.

Although the present disclosure has been described with reference to the accompanying drawings, the present disclosure is not limited by the embodiments disclosed herein and the drawings, and it is obvious that various modifications may be made by those skilled in the art within the scope of the technical idea of the present disclosure. In addition, although the effects based on the configuration of the present disclosure are not explicitly described and illustrated in the description of the embodiment of the present disclosure above, it is natural that predictable effects of the corresponding configuration should also be recognized.

## Claims

1. A composite pad comprising:
a silicone foam; an adhesive layer; and an outer layer,
wherein the adhesive layer comprises a binder and a reactive filler configured to undergo a dehydration reaction at a temperature equal to or higher than 100°C,
wherein the binder has a hardness in a range of a penetration hardness of 90 to a Shore 00 hardness of 40,
wherein the reactive filler is comprised in an amount of 50 to 300 parts by weight based on 100 parts by weight of the binder,
wherein a thickness of the adhesive layer is in a range of 40 µm to 400 µm.

2. The composite pad of claim 1, wherein the binder comprises at least one resin selected from a group consisting of a polyurethane-based resin, a silicone-based resin, and an epoxy-based resin.

3. The composite pad of claim 1, wherein a viscosity of the binder is in a range of 100cP to 2000cP at 25°C.

4. The composite pad of claim 1, wherein the reactive filler is metal hydroxide particles.

5. The composite pad of claim 4, wherein the metal hydroxide particles comprise at least one selected from a group consisting of B(OH)₃, Al(OH)₃, Mg(OH)₂, and combinations thereof.

6. The composite pad of claim 1, wherein the reactive filler comprises a mixture of first metal hydroxide particles having a D50 equal to or smaller than 2 µm and second metal hydroxide particles having a D50 equal to or greater than 5 µm.

7. The composite pad of claim 1, wherein the silicone foam is a foamed cured product of a composition comprising a polyalkylsiloxane-based resin.

8. The composite pad of claim 1, wherein the outer layer comprises at least one layer selected from a group consisting of a fire resistant layer, a flame retardant layer, an electrically insulating layer, a heat dissipation layer, and combinations thereof.

9. The composite pad of claim 1, wherein the composite pad is positioned between battery cells.
